# FASCICULE DE BREVET EUROPEEN

(11) **EP 4 112 445 B1**
(45) Date de publication et mention de la délivrance du brevet: **09.10.2024**
(21) Numéro de dépôt: 22179653.5
(22) Date de dépôt: 17.06.2022
(51) Int. Cl.: B64C 1/12, C22C 1/04, B33Y 80/00, B22F 3/11

(54) **ÉLÉMENT DE LIAISON ENTRE UN PREMIER ET UN DEUXIÈME ÉLÉMENT STRUCTUREL DE FUSELAGE D'UN AÉRONEF PERMETTANT UNE DISSIPATION AMÉLIORÉE DES EFFORTS**
VERBINDUNGSELEMENT ZWISCHEN EINEM ERSTEN UND EINEM ZWEITEN STRUKTURELEMENT DES RUMPFES EINES LUFTFAHRZEUGS, DAS EINE VERBESSERTE ABLEITUNG VON KRÄFTEN ERMÖGLICHT
ELEMENT FOR CONNECTION BETWEEN A FIRST AND SECOND STRUCTURAL ELEMENT OF AN AIRCRAFT FUSELAGE ALLOWING IMPROVED DISSIPATION OF FORCES

(30) Priorité: 29.06.2021 FR 2106994
(43) Date de publication de la demande: 04.01.2023
(73) Titulaire: Airbus Operations SAS, 31060 Toulouse (FR)
(72) Inventeur: MOLINA HAMDAN, Omar, 31060 TOULOUSE (FR); LAVIGNE, Valérie, 31060 TOULOUSE (FR); DUBOST, Jérôme, 31060 TOULOUSE (FR)
(74) Mandataire: Gevers & Orès

(56) Documents cités:
- EP-B1- 1 812 288
- DE-B4- 102009 020 896
- US-A1- 2008 023 583
- US-A1- 2016 129 984
- US-A1- 2020 239 124
- US-B2- 9 199 714

## Description

### DOMAINE TECHNIQUE

La présente invention concerne un élément de liaison destiné à lier la peau d'un fuselage d'un aéronef à un cadre de l'aéronef. Cet élément de liaison participe à une dissipation d'efforts se produisant lors de charges dynamiques, telles que des impacts au sol de l'aéronef.

### ÉTAT DE LA TECHNIQUE

Les aéronefs comprennent une structure conçue pour protéger l'intégrité des personnes à bord de l'aéronef selon des conditions définies par des règlements internationaux.

Dans le cas de charges dynamiques, telles que des impacts au sol, on s'assure que l'énergie générée par ces charges dynamiques et transmise à la structure de l'aéronef soit dissipée dans des éléments spécifiques qui sont dimensionnés dans ce but.

On sait que la structure de l'aéronef comprend un fuselage contenant généralement des cadres s'étendant de façon circonférentielle, et une peau aérodynamique à laquelle sont fixés ces cadres, ainsi que des raidisseurs s'étendant longitudinalement, qui sont agencées sur une face interne de la peau. La structure de l'aéronef comprend également des traverses soutenant un plancher et des bielles de soute.

Généralement, les éléments spécifiques utilisés pour dissiper l'énergie sont les cadres, les bielles de soute et les traverses.

Habituellement, les cadres sont fixés à la peau du fuselage à l'aide d'éléments de liaison, appelés « clips » ou « ferrures ». Or, ces éléments de liaison ne participent pas à la dissipation d'énergie en raison de leur faible contribution intrinsèque.

Le document EP 1 812 288 B1 décrit un cadre de fuselage d'aéronef. Ce cadre de fuselage comprend un cintre inférieur, une traverse de soutien d'un élément de plancher. Ce document enseigne un treillis de liaison entre le cintre inférieur et la traverse.

### EXPOSÉ DE L'INVENTION

La présente invention a pour objet de remédier à cet inconvénient. Pour ce faire, elle concerne un élément de liaison entre un premier élément structurel et un deuxième élément structurel de fuselage d'un aéronef.

Selon l'invention, l'élément de liaison comprend une première partie formée d'une structure pleine et au moins une deuxième partie formée d'une structure en treillis, la première partie formée de la structure pleine étant configurée pour dissiper des efforts statiques et pour résister à une fatigue jusqu'à un seuil maximal d'effort et de fatigue prédéterminé.

Ainsi, l'utilisation de la partie formée en structure en treillis permet donc d'obtenir une nouvelle source de dissipation d'énergie qui assure un meilleur comportement global et libère les contraintes de conceptions des pièces environnantes qui contribuent habituellement à la dissipation d'énergie.

Selon un mode de réalisation, la partie formée de la structure pleine comprend au moins une portion ouverte, la ou les portions ouvertes étant occupées par la ou les deuxièmes parties formées de la structure en treillis.

Selon un autre mode de réalisation, la ou les deuxièmes parties formées de la structure en treillis recouvrent au moins en partie la première partie formée de la structure pleine.

Selon une particularité, l'élément de liaison comprend une âme destinée à être fixée au premier élément structurel de fuselage et une semelle destinée à être fixée au deuxième élément structurel de fuselage, la semelle et l'âme étant reliées par une ligne de jonction.

De plus, l'âme comprend une première zone en forme de bande parallèle à la ligne de jonction, la première zone comprenant la ou les portions ouvertes espacées par au moins une portion en structure pleine.

Avantageusement, la ou les portions en structure pleine présentent une section dimensionnée pour dissiper les efforts statiques jusqu'au seuil maximal d'effort et de fatigue prédéterminé.

De plus, la ou les portions en structure pleine présentent une hauteur perpendiculaire à la première zone, la hauteur étant dimensionnée pour que la ou les portions en structure pleine soient aptes à dissiper les efforts statiques jusqu'au seuil maximal d'effort et de fatigue prédéterminé.

Selon une particularité, l'âme comprend une deuxième zone en forme de bande parallèle à la première zone en forme de bande, la deuxième zone comprenant des premiers orifices de fixation destinés à recevoir des éléments de fixation prévus pour fixer l'élément de liaison au premier élément structurel de fuselage. Avantageusement, les premiers orifices de fixation sont disposés au droit de la ou des portions en structure pleine.

Selon une autre particularité, la semelle comprend des deuxièmes orifices de fixation destinés à recevoir des éléments de fixation prévus pour fixer l'élément de liaison au deuxième élément structurel de fuselage.

Avantageusement, les deuxièmes orifices de fixation sont disposés au droit de la ou des portions en structure pleine.

Selon un mode de réalisation, la structure en treillis recouvre complètement la première zone sur au moins une face de l'âme.

De façon non limitative, l'élément de liaison est fabriqué en titane.

Par ailleurs, l'élément de liaison est fabriqué par impression à trois dimensions. L'invention concerne également un aéronef.

Selon l'invention, l'aéronef comprend un fuselage comportant un premier élément structurel, un deuxième élément structurel et un élément de liaison tel que spécifié ci-dessus.

### BRÈVE DESCRIPTION DES FIGURES

Les figures annexées feront bien comprendre comment l'invention peut être réalisée. Sur ces figures, des références identiques désignent des éléments semblables.
La figure 1 est une vue en perspective de l'élément de liaison selon un mode de réalisation.
La figure 2 est une vue en perspective de l'élément de liaison selon un autre mode de réalisation.
La figure 3 représente un détail d'un exemple d'une structure en treillis.
La figure 4 représente une vue en perspective de l'élément de liaison selon un autre mode de réalisation.
La figure 5 représente une vue de face de l'élément de liaison selon le mode de réalisation de la figure 4.
La figure 6 représente une vue de profil de l'élément de liaison selon le mode de réalisation de la figure 4.
La figure 7 représente une vue de profil d'un aéronef présentant un fuselage dont les cadres sont fixés à la peau par au moins un élément de liaison.
La figure 8 présente une vue schématique en perspective et en transparence d'une portion de fuselage de l'aéronef de la figure 7. Ladite portion de fuselage comprend un cadre fixé à la peau par plusieurs éléments de liaison.

### DESCRIPTION DÉTAILLÉE

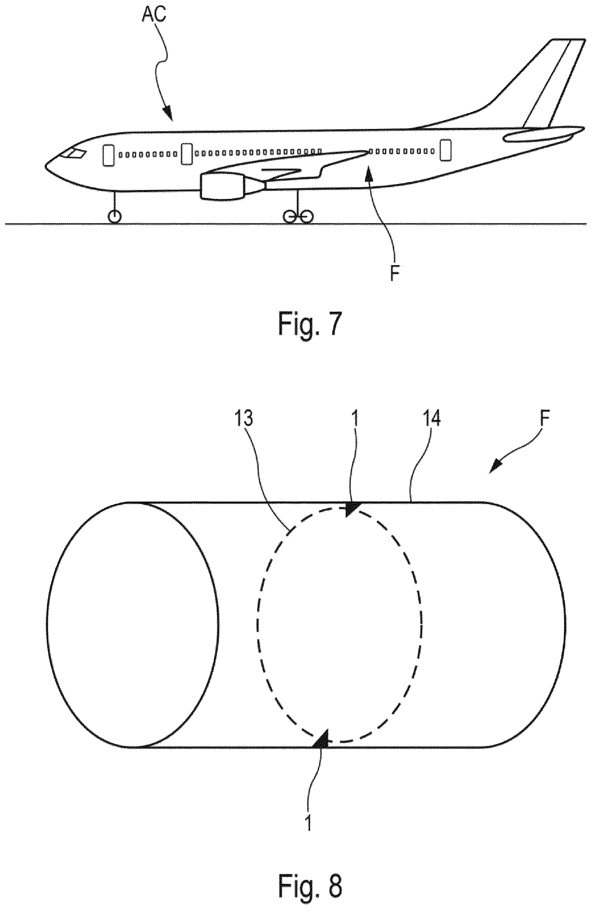

L'invention concerne un élément de liaison 1 entre un élément structurel 13 et un élément structurel 14 de fuselage F d'un aéronef AC, tel qu'un avion de transport (figure 7). L'élément de liaison 1 participe à la fixation de l'élément structurel 13 à l'élément structurel 14 du fuselage F de l'aéronef AC.

À titre d'exemple, l'élément structurel 13 correspond à un cadre de fuselage F et l'élément structurel 14 correspond à une peau du fuselage F. La figure 8 représente une portion de fuselage F comportant un cadre fixé à une peau à l'aide d'éléments de liaison 1. Par souci de clarté, seuls deux éléments de liaison 1 sont représentés sur la figure 8.

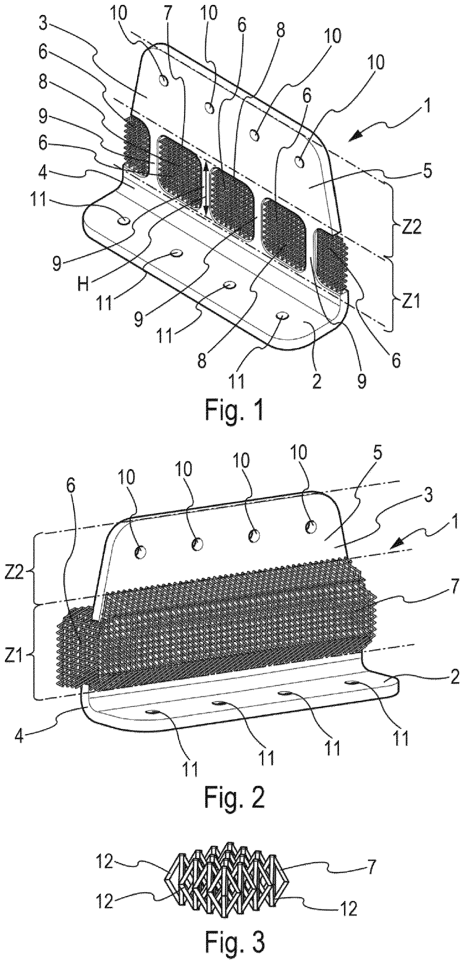

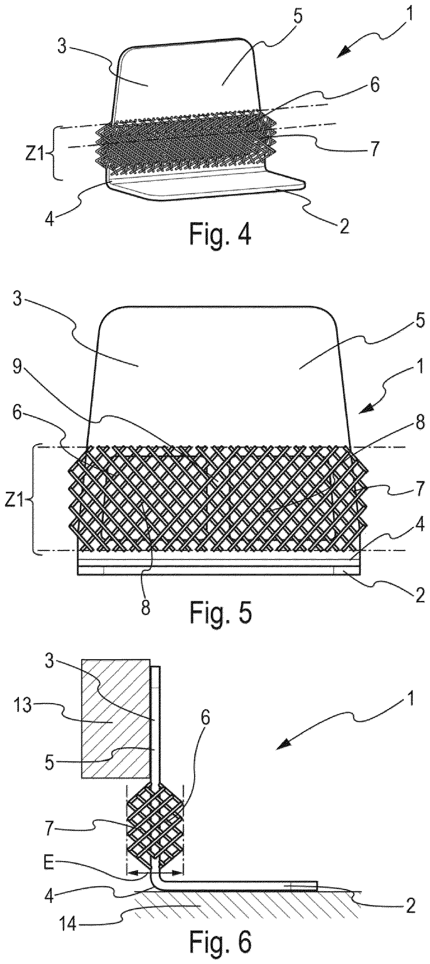

Sur la figure 1, la figure 2 ainsi que de la figure 4 à la figure 6, on a représenté différents éléments de liaison 1 selon différents points de vue.

L'élément de liaison 1 comprend une partie 5 formée d'une structure pleine et au moins une partie 6 formée d'une structure en treillis 7.

La partie 5 formée de la structure pleine est configurée pour dissiper des efforts statiques et pour résister à une fatigue jusqu'à un seuil maximal d'effort et de fatigue prédéterminé.

Le seuil maximal d'effort et de fatigue prédéterminé peut être défini comme étant une valeur de fatigue en-dessous duquel la première partie 5 formée de la structure pleine est apte à dissiper des efforts statiques exercés de façon usuelle sur l'élément de liaison 1 et à résister à une fatigue subie de façon usuelle par l'élément de liaison 1.

La structure pleine correspond à un matériau plein.

La structure en treillis 7 (ou « lattice structure » en anglais) peut être aussi appelée « structure lattice ».

La structure en treillis 7 correspond à un type de matériau non plein, architecturé poreux, comportant une répétition spatiale non stochastique d'un motif élémentaire 12. La répétition spatiale du motif élémentaire 12 est valable dans les trois dimensions de l'espace. La structure en treillis 7 est très efficace en termes de dissipation d'énergie par unité de masse.

La figure 3 représente un exemple de détail d'une structure en treillis 7. Dans cette figure 3, le motif élémentaire 12 de la structure en treillis 7 correspond à un octaèdre. La structure en treillis 7 de la figure 3 est donc formée de motifs élémentaires 12 en forme d'octaèdre se répétant spatialement dans les trois dimensions de l'espace. De préférence, le nombre et la forme de la géométrie des motifs élémentaires 12 d'une structure en treillis 7 sont définis de manière à assurer une dissipation maximale de l'énergie sur toute la durée de la charge dynamique.

Ainsi, de préférence, l'intégration d'une structure en treillis 7 dans un élément de liaison 1 répond aux caractéristiques suivantes :
- une tenue aux efforts statiques et fatigues exercés habituellement par les structures aéronautiques,
- un déclenchement de la dissipation des efforts à partir du seuil maximal d'effort et de fatigue,
- une optimisation de la dissipation qui assure la diminution du transfert d'énergie vers les éléments environnants de l'élément de liaison 1.

L'utilisation d'une partie 6 formée de la structure en treillis 7 permet d'obtenir un élément de liaison 1 léger par rapport à des éléments de liaison fabriqués selon des solutions conventionnelles.

De préférence, l'élément de liaison 1 est monobloc, c'est-à-dire fait d'une seule pièce. La partie 5 formée de la structure pleine et la partie 6 formée de la structure en treillis 7 forment ainsi un ensemble monobloc. La partie 5 formée de la structure pleine et la partie 6 formée de la structure en treillis 7 sont fabriquées à partir de la même matière. À titre d'exemple, l'élément de liaison 1 est fabriqué en titane.

Avantageusement, l'élément de liaison 1 est fabriqué par impression à trois dimensions.

L'impression à trois dimensions peut générer des défauts d'état de surface qui peuvent limiter la tenue de l'élément de liaison 1 à la fatigue. Il peut donc être important d'assurer une configuration de l'élément de liaison 1 qui permette soit d'usiner les zones de l'élément de liaison 1 soumises à la fatigue, soit d'utiliser un traitement de surface qui permette d'obtenir une rugosité de surface standard. Comme représenté sur la figure 1 et la figure 5, la partie 5 formée de la structure pleine comprend avantageusement au moins une portion ouverte 8. La ou les portions ouvertes 8 sont occupées par la ou les parties 6 formées de la structure en treillis 7. La ou les deuxièmes parties 6 formées de la structure en treillis 7 peuvent également recouvrir, au moins en partie, la première partie 5 formée de la structure pleine.

Selon un mode de réalisation, l'élément de liaison 1 comporte une semelle 2 destinée à être fixée à l'élément structurel 14 de fuselage F et une âme 3 destinée à être fixée à l'élément structurel 13. Dans un exemple représenté sur la figure 6, l'élément structurel 13 correspond à un cadre et l'élément structurel 14 correspond à une peau. Dans cette figure 6, le cadre et la peau sont représentés très schématiquement. La semelle 2 et l'âme 3 sont reliées entre elles par une ligne de jonction 4.

Généralement, la semelle 2 est sensiblement perpendiculaire à l'âme 3. La ligne de liaison 4 peut correspondre à un coin entre la semelle 2 et l'âme 3. L'élément de liaison 1 peut présenter une forme de T ou de L.

De préférence, la ou les portions ouvertes 8 sont agencées à travers l'âme 3 de l'élément de liaison 1.

Selon une configuration, la ou les parties 6 formées de la structure en treillis 7 présente une épaisseur E (perpendiculaire à l'âme 3) sensiblement égale à l'épaisseur de la partie 5 formée de la structure pleine de l'élément de liaison 1. Selon d'autres formes de réalisation, cette épaisseur E peut être plus grande que l'épaisseur de la partie 5 formée de la structure pleine de l'élément de liaison 1. Comme représenté sur la figure 1, la figure 2, la figure 4 et la figure 5, l'âme 3 peut comprendre une zone Z1 en forme de bande parallèle à la ligne de jonction 4. La zone Z1 peut ainsi comprendre la ou les portions ouvertes 8 espacées par au moins une portion en structure pleine 9 (ou autrement appelé « zone monolithique ») de la partie 5 formée de la structure pleine.

La ou les portions ouvertes 8 peuvent être espacées de façon régulière par la ou les portions en structure pleine 9.

La ou les portions en structure pleine 9 sont configurées pour que leur comportement en fatigue soit optimisé. Ainsi, il est possible d'usiner ou d'effectuer un post-traitement de cette ou ces portions en structure pleine 9 pour améliorer leur tenue en fatigue. Il est également possible de réduire des accidents géométriques qui pourraient être formés à la fabrication de l'élément de liaison 1, notamment au niveau des extrémités de la ou des portions en structure pleine 9.

La ou les portions en structure pleine 9 peuvent présenter une section transversale dimensionnée pour dissiper les efforts statiques jusqu'au seuil maximal d'effort et de fatigue prédéterminé. Au-delà du seuil maximal d'effort et de fatigue prédéterminé, la rupture ou le flambage sont souhaités de manière à faire travailler la partie 6 formée de la structure en treillis 7. La section transversale dépend du matériau dans lequel est fabriqué l'élément de liaison 1 et du seuil maximal d'effort et de fatigue prédéterminé.

Par ailleurs, la ou les portions en structure pleine 9 présente une hauteur H perpendiculaire à la ligne de jonction 4 (voir figure 1). Cette hauteur H est avantageusement dimensionnée pour que la ou les portions en structure pleine 9 soient aptes à dissiper les efforts statiques jusqu'au seuil maximal d'effort et de fatigue prédéterminé.

Avantageusement, le nombre de liaisons physiques entre les portions en structure pleine 9 et la partie 6 formée de la structure en treillis 7 est limité à un nombre de liaisons physiques permettant un découplage entre, d'une part, la dissipation des efforts statiques et de résistance à la fatigue par la portion en structure pleine 9 et, d'autre part, la dissipation par la partie 6 formée de la structure en treillis 7.

De préférence, l'âme 3 comprend une zone Z2 en forme de bande parallèle à la zone Z1 en forme de bande. La zone Z2 comprend des orifices de fixation 10 destinés à recevoir des éléments de fixation prévus pour fixer l'élément de liaison 1 à l'élément structurel 13 du fuselage F. De préférence, si les contraintes d'assemblage du fuselage F le permettent, les orifices de fixation 10 sont disposés au droit de la ou des portions en structure pleine 9. Avantageusement, un orifice de fixation 10 est disposé au droit de chacune des portions en structure pleine 9. La hauteur H de la ou des portions en structure pleine 9 peut être en outre limitée par des contraintes liées à la fixation de l'élément de liaison 1 à l'élément structurel 13 du fuselage F et à la ligne de jonction 4.

La semelle 2 peut aussi comprendre des orifices de fixation 11 destinés à recevoir des éléments de fixation prévus pour fixer l'élément de liaison 1 à l'élément structurel 14. De préférence, si les contraintes d'assemblage le permettent, les orifices de fixation 11 sont disposés au droit de la ou des portions en structure pleine 9. Avantageusement, un orifice de fixation 11 est disposé au droit de chacune des portions en structure pleine 9.

Cette disposition des orifices de fixation 10 et/ou 11 permet d'optimiser le transfert d'effort de pressurisation. Elle permet éventuellement de laisser un espace disponible pour le passage d'outils permettant de fixer l'élément de liaison 1.

Comme représenté sur la figure 2, la figure 4, la figure 5 et la figure 6, la structure en treillis 7 peut recouvrir complètement la zone Z1 sur au moins une face de l'âme 3.

Le recouvrement par la structure en treillis 7 permet d'augmenter le comportement dissipatif de l'élément de liaison 1 en assurant une meilleure stabilité de l'élément de liaison 1 et un meilleur transfert des efforts lorsque le seuil d'effort de de fatigue est dépassé.

Selon un mode de réalisation représentée sur la figure 2, la figure 4 et plus particulièrement sur la figure 6, la partie 6 formée de la structure en treillis 7 peut avoir une épaisseur E supérieure à l'épaisseur de la partie 5 formée de la structure pleine telle qu'elle s'intègre au moins en partie entre l'élément structurel 13, en particulier le cadre de fuselage F, et l'élément structurel 14, en particulier la peau de fuselage F. Cette augmentation de l'épaisseur E par rapport à la forme de réalisation de la figure 1 assure une meilleure stabilité de l'élément de liaison 1 permettant une efficacité accrue de la dissipation lors de grandes déformations. L'épaisseur E peut être limitée par les contraintes d'assemblage pour fixer l'élément de liaison 1 au cadre 13 et à la peau 14. Cette limitation permet de laisser un espace disponible pour le passage d'outils permettant de fixer l'élément de liaison 1.

## Revendications

1. Élément de liaison entre un premier élément structurel (13) et un deuxième élément structurel (14) de fuselage (F) d'un aéronef (AC), **caractérisé en ce que** l'élément de liaison (1) comprend une première partie (5) formée d'une structure pleine et au moins une deuxième partie (6) formée d'une structure en treillis (7), la première partie (5) formée de la structure pleine étant configurée pour dissiper des efforts statiques et pour résister à une fatigue jusqu'à un seuil maximal d'effort et de fatigue prédéterminé.

2. Élément de liaison selon la revendication 1,
**caractérisé en ce que** la partie formée de la structure pleine (5) comprend au moins une portion ouverte (8), la ou les portions ouvertes (8) étant occupées par la ou les deuxièmes parties (6) formées de la structure en treillis (7).

3. Élément de liaison selon l'une quelconque des revendications 1 ou 2, **caractérisé en ce que** la ou les deuxièmes parties (6) formées de la structure en treillis (7) recouvrent au moins en partie la première partie (5) formée de la structure pleine.

4. Élément de liaison selon l'une quelconque des revendications 1 à 3, **caractérisé en ce qu'**il comprend une âme (3) destinée à être fixée au premier élément structurel (13) de fuselage et une semelle (2) destinée à être fixée au deuxième élément structurel (14) de fuselage, la semelle (2) et l'âme (3) étant reliées par une ligne de jonction (4).

5. Élément de liaison selon la revendication 4 en dépendance directe ou indirecte de la revendication 2,
**caractérisé en ce que** l'âme (3) comprend une première zone (Z1) en forme de bande parallèle à la ligne de jonction (4), la première zone (Z1) comprenant la ou les portions ouvertes (8) espacées par au moins une portion en structure pleine (9).

6. Élément de liaison selon la revendication 5,
**caractérisé en ce que** la ou les portions en structure pleine (9) présentent une section dimensionnée pour dissiper les efforts statiques jusqu'au seuil maximal d'effort et de fatigue prédéterminé.

7. Élément de liaison selon l'une quelconque des revendications 5 à 6, **caractérisé en ce que** la ou les portions en structure pleine (9) présentent une hauteur (H) perpendiculaire à la première zone (Z1), la hauteur (H) étant dimensionnée pour que la ou les portions en structure pleine (9) soient aptes à dissiper les efforts statiques jusqu'au seuil maximal d'effort et de fatigue prédéterminé.

8. Élément de liaison selon l'une quelconque des revendications 5 à 7, **caractérisé en ce que** l'âme (3) comprend une deuxième zone (Z2) en forme de bande parallèle à la première zone (Z1) en forme de bande, la deuxième zone (Z2) comprenant des premiers orifices de fixation (10) destinés à recevoir des éléments de fixation prévus pour fixer l'élément de liaison (1) au premier élément structurel (13) de fuselage (F).

9. Élément de liaison selon la revendication 8,
**caractérisé en ce que** les premiers orifices (10) sont disposés au droit de la ou des portions en structure pleine (9).

10. Élément de liaison selon l'une quelconque des revendications 4 à 9, **caractérisé en ce que** la semelle (2) comprend des deuxièmes orifices de fixation (11) destinés à recevoir des éléments de fixation prévus pour fixer l'élément de liaison (1) au deuxième élément structurel (14) de fuselage (F).

11. Élément de liaison selon la revendication 10,
**caractérisé en ce que** les deuxièmes orifices de fixation (11) sont disposés au droit de la ou des portions en structure pleine (9).

12. Élément de liaison selon l'une quelconque des revendications 5 à 9 ou 10 à 11 en dépendance directe ou indirecte de la revendication 5,
**caractérisé en ce que** la structure en treillis (7) recouvre complètement la première zone (Z1) sur au moins une face de l'âme (3).

13. Élément de liaison selon l'une quelconque des revendications 1 à 12, **caractérisé en ce qu'**il est fabriqué en titane.

14. Élément de liaison selon l'une quelconque des revendications 1 à 13, **caractérisé en ce qu'**il est fabriqué par impression à trois dimensions.

15. Aéronef,
**caractérisé en ce qu'**il comprend un fuselage (F) comportant un premier élément structurel (13), un deuxième élément structurel (14) et un élément de liaison (1) selon l'une quelconque des revendications 1 à 14.

## Patentansprüche

1. Element zur Verbindung zwischen einem ersten Strukturelement (13) und einem zweiten Strukturelement (14) des Rumpfes (F) eines Luftfahrzeugs (AC),
**dadurch gekennzeichnet, dass** das Verbindungselement (1) einen ersten Teil (5), der von einer massiven Struktur gebildet wird, und mindestens einen zweiten Teil (6) umfasst, der von einer Gitterstruktur (7) gebildet wird, wobei der erste Teil (5), der von der massiven Struktur gebildet wird, so konfiguriert ist, dass er bis zu einer vorbestimmten maximalen Kraft- und Ermüdungsschwelle statische Kräfte ableitet und einer Ermüdung widersteht.

2. Verbindungselement nach Anspruch 1,
**dadurch gekennzeichnet, dass** der Teil, der von der massiven Struktur (5) gebildet wird, mindestens einen offenen Abschnitt (8) umfasst, wobei der oder die offenen Abschnitte (8) von dem oder den zweiten Teilen (6), die von der Gitterstruktur (7) gebildet werden, eingenommen werden.

3. Verbindungselement nach einem der Ansprüche 1 oder 2,
**dadurch gekennzeichnet, dass** der oder die zweiten Teile (6), die von der Gitterstruktur (7) gebildet werden, den ersten Teil (5), der von der massiven Struktur gebildet wird, mindestens zum Teil überdecken.

4. Verbindungselement nach einem der Ansprüche 1 bis 3,
**dadurch gekennzeichnet, dass** es einen Steg (3), der dazu bestimmt ist, am ersten Rumpfstrukturelement (13) befestigt zu werden, und eine Sohle (2) umfasst, die dazu bestimmt ist, am zweiten Rumpfstrukturelement (14) befestigt zu werden, wobei die Sohle (2) und der Steg (3) durch eine Verbindungslinie (4) miteinander verbunden sind.

5. Verbindungselement nach Anspruch 4 in direkter oder indirekter Abhängigkeit von Anspruch 2,
**dadurch gekennzeichnet, dass** der Steg (3) einen zur Verbindungslinie (4) parallelen ersten streifenförmigen Bereich (Z1) umfasst, wobei der erste Bereich (Z1) den oder die offenen Abschnitte (8) umfasst, die durch mindestens einen Abschnitt aus massiver Struktur (9) beabstandet sind.

6. Verbindungselement nach Anspruch 5,
**dadurch gekennzeichnet, dass** der oder die Abschnitte aus massiver Struktur (9) einen Querschnitt aufweisen, der so bemessen ist, dass er die statischen Kräfte bis zu der vorbestimmten maximalen Kraft- und Ermüdungsschwelle ableitet.

7. Verbindungselement nach einem der Ansprüche 5 bis 6,
**dadurch gekennzeichnet, dass** der oder die Abschnitte aus massiver Struktur (9) eine Höhe (H) senkrecht zum ersten Bereich (Z1) aufweisen, wobei die Höhe (H) so bemessen ist, dass der oder die Abschnitte aus massiver Struktur (9) in der Lage sind, die statischen Kräfte bis zu der vorbestimmten maximalen Kraft- und Ermüdungsschwelle abzuleiten.

8. Verbindungselement nach einem der Ansprüche 5 bis 7,
**dadurch gekennzeichnet, dass** der Steg (3) einen zum ersten streifenförmigen Bereich (Z1) parallelen zweiten streifenförmigen Bereich (Z2) umfasst, wobei der zweite Bereich (Z2) erste Befestigungsöffnungen (10) umfasst, die dazu bestimmt sind, Befestigungselemente aufzunehmen, die dafür vorgesehen sind, das Verbindungselement (1) am ersten Strukturelement (13) des Rumpfes (F) zu befestigen.

9. Verbindungselement nach Anspruch 8,
**dadurch gekennzeichnet, dass** die ersten Öffnungen (10) an dem oder den Abschnitten aus massiver Struktur (9) angeordnet sind.

10. Verbindungselement nach einem der Ansprüche 4 bis 9,
**dadurch gekennzeichnet, dass** die Sohle (2) zweite Befestigungsöffnungen (11) umfasst, die dazu bestimmt sind, Befestigungselemente aufzunehmen, die dafür vorgesehen sind, das Verbindungselement (1) am zweiten Strukturelement (14) des Rumpfes (F) zu befestigen.

11. Verbindungselement nach Anspruch 10,
**dadurch gekennzeichnet, dass** die zweiten Befestigungsöffnungen (11) an dem oder den Abschnitten aus massiver Struktur (9) angeordnet sind.

12. Verbindungselement nach einem der Ansprüche 5 bis 9 oder 10 bis 11 in direkter oder indirekter Abhängigkeit von Anspruch 5,
**dadurch gekennzeichnet, dass** die Gitterstruktur (7) den ersten Bereich (Z1) auf mindestens einer Seite des Stegs (3) vollständig überdeckt.

13. Verbindungselement nach einem der Ansprüche 1 bis 12,
**dadurch gekennzeichnet, dass** es aus Titan hergestellt ist.

14. Verbindungselement nach einem der Ansprüche 1 bis 13,
**dadurch gekennzeichnet, dass** es durch dreidimensionalen Druck hergestellt ist.

15. Luftfahrzeug,
**dadurch gekennzeichnet, dass** es einen Rumpf (F) umfasst, der ein erstes Strukturelement (13), ein zweites Strukturelement (14) und ein Verbindungselement (1) nach einem der Ansprüche 1 bis 14 umfasst.

## Claims

1. Linking member between a first structural member (13) and a second structural member (14) of the fuselage (F) of an aircraft (AC),
**characterized in** the the linking member (1) comprises a first part (5) made of a solid structure and at least one second part (6) made of a lattice structure (7), the first part (5) made of the solid structure being configured to dissipate static stresses and to withstand fatigue up to a predetermined maximum stress and fatigue threshold.

2. Linking member as claimed in claim 1,
**characterized in that** the part (5) made of the solid structure comprises at least one open portion (8), the open portion or portions (8) being occupied by the second part or parts (6) made of the lattice structure (7).

3. Linking member as claimed in any one of claims 1 or 2, **characterized in that** the second part or parts (6) made of the lattice structure (7) at least partly cover the first part (5) made of the solid structure.

4. Linking member as claimed in any one of claims 1 to 3, **characterized in that** it comprises a web plate (3) intended to be fixed to the first structural member (13) of the fuselage and a base plate (2) intended to be fixed to the second structural member (14) of the fuselage, the base plate (2) and the web plate (3) being connected by a joint line (4).

5. Linking member as claimed in claim 4 in direct or indirect dependance on claim 2,
**characterized in that** the web plate (3) comprises a first zone (Z1) in the form of a strip parallel to the joint line (4), the first zone (Z1) comprising the open portion or portions (8) spaced apart by at least one solid structure portion (9).

6. Linking member as claimed in claim 5,
**characterized in that** the solid structure portion or portions (9) have a cross-section designed to dissipate the static stresses up to the predetermined maximum stress and fatigue threshold.

7. Linking member as claimed in any one of claims 5 to 6, **characterized in that** the solid structure portion or portions (9) have a height (H) perpendicular to the first zone (Z1), the height (H) being designed so that the solid structure portion or portions (9) are capable of dissipating the static stresses up to the predetermined maximum stress and fatigue threshold.

8. Linking member as claimed in any one of claims 5 to 7, **characterized in that** the web plate (3) comprises a second zone (Z2) in the form of a strip parallel to the first zone (Z1) in the form of a strip, the second zone (Z2) comprising first fixing holes (10) intended to accommodate fixing members provided for fixing the linking member (1) to the first structural member (13) of the fuselage (F).

9. Linking member as claimed in claim 8,
**characterized in that** the first holes (10) are disposed in line with the solid structure portion or portions (9).

10. Linking member as claimed in any one of claims 4 to 9, **characterized in that** the base plate (2) comprises second fixing holes (11) intended to accommodate fixing members provided for fixing the linking member (1) to the second structural member (14) of the fuselage (F).

11. Linking member as claimed in claim 10,
**characterized in that** the second fixing holes (11) are disposed in line with the solid structure portion or portions (9).

12. Linking member as claimed in any one of claims 5 to 9 or 10 to 11 in direct or indirect dependance on claim 5,
**characterized in that** the lattice structure (7) completely covers the first zone (Z1) over at least one face of the web plate (3).

13. Linking member as claimed in any one of claims 1 to 12, **characterized in that** it is manufactured from titanium.

14. Linking member as claimed in any one of claims 1 to 13, **characterized in that** it is manufactured by three-dimensional printing.

15. An aircraft,
**characterized in that** it comprises a fuselage (F) comprising a first structural member (13), a second structural member (14) and a linking member (1) as claimed in any one of claims 1 to 14.
